# EUROPÄISCHE PATENTSCHRIFT

(11) **EP 2 171 404 B1**
(45) Veröffentlichungstag und Bekanntmachung des Hinweises auf die Patenterteilung: **10.09.2014**
(21) Anmeldenummer: 08773792.0
(22) Anmeldetag: 01.07.2008
(51) Int. Cl.: G01D 13/26, B60K 37/02

(54) **ANZEIGEVORRICHTUNG ZUR ERZEUGUNG EINER KONTURIERTEN FORM**
DISPLAY DEVICE FOR GENERATING A CONTOURED FORM
DISPOSITIF D'AFFICHAGE DESTINÉ À GÉNÉRER UNE FORME CONTOURÉE

(30) Priorität: 19.07.2007 DE 102007033995
(43) Veröffentlichungstag der Anmeldung: 07.04.2010
(73) Patentinhaber: Johnson Controls Automotive Electronics GmbH, 75196 Remchingen (DE)
(72) Erfinder: SÜSS, Manfred, 75196 Remchingen (DE)
(74) Vertreter: Schwöbel, Thilo K.
(86) Internationale Anmeldenummer: PCT/EP2008/005364
(87) Internationale Veröffentlichungsnummer: WO 2009/010184

(56) Entgegenhaltungen:
- EP-A- 1 724 556
- WO-A-01/92047
- WO-A1-2006/024747
- DE-A1- 2 823 639
- DE-A1- 4 241 719
- DE-A1- 10 036 037
- DE-A1- 10 131 262
- DE-A1- 10 145 036
- DE-A1- 19 532 618
- DE-A1- 19 737 679
- US-A1- 2006 146 542
- US-B1- 7 178 479

## Beschreibung

Die Erfindung betrifft eine Anzeigevorrichtung mit einem ersten Zeiger, einem zweiten Zeiger, einer Lichtquelle und einer Anzeigefläche, wobei der Zeiger und die Lichtquelle unter der Anzeigefläche liegen.

Solche Anzeigevorrichtungen sind allgemein bekannt. So beschreibt beispielsweise die Patentschrift DE 42 41 719 C2 eine Zeigervorrichtung für ein Fahrzeug mit einem Zeiger, wobei der Zeiger zur Leitung des Lichtes verwendet wird. Nachteilig ist jedoch bei der beschriebenen Vorrichtung, dass die Anordnung des Zeigers relativ zu der Anzeigefläche bestimmten vergleichsweise engen Bedingungen genügen muss und darüberhinaus auch in seinem optischen Eindruck vergleichsweise geringe gestalterische Optionen aufweist.

Es war daher die Aufgabe der vorliegenden Erfindung eine Anzeigevorrichtung anzugeben, bei der ein möglichst einfacher Aufbau eines Unterflurzeigers möglich ist und ferner auch ein in weiten Bereichen gestaltbarer optischer Eindruck bzw. eine zeigerähnliche Darstellung des Unterflurzeigers trotz eines einfachen und kostengünstigen Aufbaus und lediglich geringen Montageanforderungen möglich ist.

Gelöst wird die Aufgabe mit einer Anzeigevorrichtung gemäß Anspruch 1. Hierdurch wird vorteilhaft ermöglicht, dass die Darstellung bzw. der optische Eindruck des ersten Zeigers in weiten Grenzen variabel gehalten werden kann und daher auch auf die optische Darstellung des zweiten Zeigers anpassbar ist, was eine besonders angenehme und ästhetisch vorteilhafte Anmutung der Anzeigevorrichtung insgesamt ermöglicht.

Ferner ist erfindungsgemäß bevorzugt, dass die Darstellung des ersten Zeigers eine Spitze aufweist bzw. dass die Darstellung des ersten Zeigers im wesentlichen "zeigerhaft", d.h. in der Form eines Zeigers ausgebildet ist und insbesondere an die Form bzw. die Anmutung des zweiten Zeigers angepasst ist. Dies bewirkt in vorteilhafter Weise einen besonders guten optischen Eindruck der erfindungsgemäßen Anzeigevorrichtung.

Weiterhin ist es erfindungsgemäß bevorzugt, dass der erste Zeiger und/oder der zweite Zeiger drehbeweglich ausgebildet ist. Hierdurch kann eine klassische Anzeigevorrichtung mit Rundinstrumenten in einfacher Weise erfindungsgemäß ausgestaltet werden.

Ferner ist es bevorzugt, dass dass die Lichtquelle relativ zu dem ersten Zeiger ortsfest angeordnet ist. Damit ist eine besonders einfache Lichtversorgung des ersten Zeigers durch die Lichtquelle möglich. Ferner wird dadurch vorteilhaft ein einfacher und stabiler Aufbau des ersten Zeigers der Anzeigevorrichtung ermöglicht.

Weiterhin ist es erfindungsgemäß vorgesehen, dass als Lichtquelle mindestens eine Leuchtdiode vorhanden ist, insbesondere eine Mehrzahl von in verschiedenen Farben leuchtbare Leuchtdioden oder eine mehrfarbig leuchtende Leuchtdiode. Hierdurch kann in besonders einfacher und kostengünstiger Weise ein leichter und damit sehr bewegungsdynamischer sowie weiterhin auch kostengünstiger erster Zeiger realisiert werden.

Es ist erfindungsgemäß vorgesehen, dass die Lichtquelle divergentes und/oder konvergentes Licht erzeugt und im wesentlichen paralleles Licht die Darstellung des ersten Zeigers auf der Anzeigefläche bewirkt, wobei insbesondere der erste Zeiger mindestens ein optisches Bauteil aufweist, mittels dem eine Umwandlung des Lichts der Lichtquelle in paralleles Licht vorgesehen ist. In vorteilhafter Weise kann demnach jede beliebige Lichtquelle verwendet werden. Es ist vorgesehen, dass der Zeiger mindestens ein optisches Bauteil aufweist. Besonders bevorzugt weist der Zeiger mehr als ein optisches Bauteil auf. Durch die optischen Bauteile ist es bevorzugt möglich, das Licht der Lichtquelle in paralleles Licht umzuwandeln. Besonders vorteilhaft übernimmt somit der Zeiger nicht nur die Aufgabe Licht durch die Anzeigevorrichtung zu führen bzw. zu lenken, sondern wandelt dabei das Licht zusätzlich in paralleles Licht um. Bei dem Führen und Lenken des Lichts durch den Zeiger soll verstanden werden, dass der Zeiger das Licht einer Lichtquelle aufnimmt und zu einer anderen Stelle leitet. Unter Umwandeln des Lichts soll dabei verstanden werden, wenn mittels eines optischen Bauteils oder mehrerer optischer Bauteile der Strahlengang des Lichts geändert wird. Besonders bevorzugt weist der Zeiger als optisches Bauteil mindestens eine Linse, und/oder eine Blende und/oder ein Prisma und/oder einen Lichtleiter und/oder einen Spiegel auf. In vorteilhafter Weise wird das Licht durch die optischen Bauteile so beeinflusst, dass eine Änderung des Strahlengangs bzw. eine Lenkung des Lichts erfolgt. Besonders bevorzugt wird durch die Blende verhindert, dass Licht oberhalb oder unterhalb einer Linse oder eines Lichtleiters in die Anzeigevorrichtung bzw. den Innenraum der Anzeigevorrichtung abgestrahlt wird. Alternativ zu einem Aufbau mit einem optischen Bauteil ist es erfindungsgemäß auch möglich, dass kein solches optische Bauteil vorhanden ist, sondern der erste Zeiger einen besonders einfachen Aufbau aufweist.

Die Erfindung wird nachfolgend anhand von Figuren erläutert. Die Erläuterungen sind dabei lediglich beispielhaft und schränken den allgemeinen Erfindungsgedanken nicht ein.
- **Figur 1**: stellt schematisch eine perspektivische Darstellung einer Anzeigevorrichtung mit einer Lichtquelle und einem ersten und einem zweiten Zeiger dar.
- **Figuren 2 bis 4**: stellen schematisch verschiedene Darstellungen des ersten Zeigers dar.
- **Figur 5**: stellt schematisch den ersten Zeiger und den zweiten Zeiger in einer Detailansicht dar.

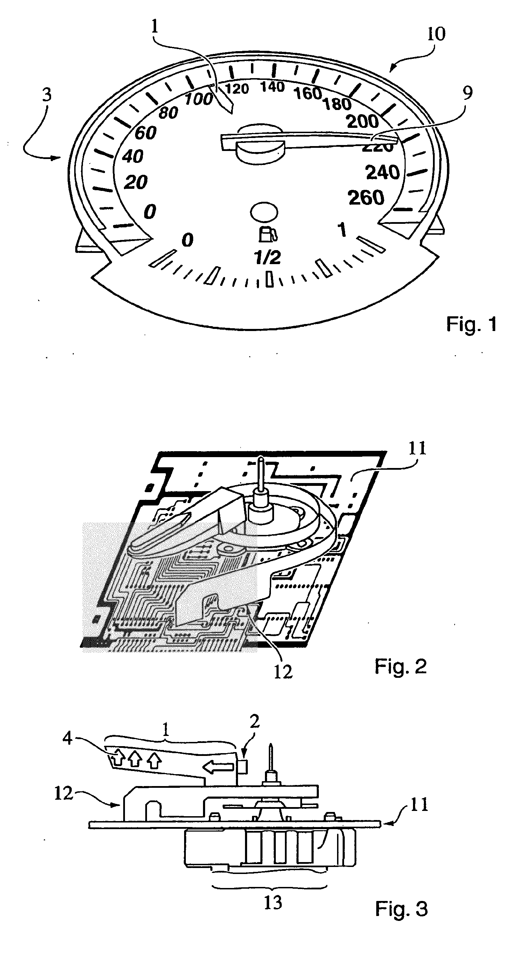

In **Figur 1** ist schematisch eine perspektivische Darstellung einer erfindungsgemäßen Anzeigevorrichtung 10 mit einer Anzeigefläche 3 dargestellt. Die Anzeigevorrichtung 10, beispielsweise als Teil eines Kombinationsinstruments und insbesondere in einem Kraftfahrzeug, weist einen ersten Zeiger 1 und einen zweiten Zeiger 9 auf. Die Anzeigefläche 3 weist eine Sichtseite bzw. eine Vorderseite auf. Weiterhin weist die Anzeigefläche 3 eine Rückseite auf. Auf der Vorderseite bzw. der Sichtseite der Anzeigefläche 3 ist der zweite Zeiger 9, bevorzugt als ein drehbeweglicher Zeiger, als Beispiel für die Darstellung eines Wertes auf der Anzeigefläche 3 abgebildet. Der erste Zeiger 1 ist hierbei unterhalb der Anzeigefläche 3 angeordnet, d.h. auf der einem Benutzer der Anzeigevorrichtung 10 abgewandten (der Vorderseite entgegengesetzt liegenden) Seite der Anzeigefläche 3. Die Anzeigevorrichtung 10 ist insbesondere als ein Rundinstrument ausgebildet, wobei zumindest einer der Zeiger 1, 9, bevorzugt jedoch beide Zeiger 1, 9, jeweils drehbar angeordnet sind und jeweils einen Anzeigewert darzustellen in der Lage sind. Hierbei ist es erfindungsgemäß insbesondere vorgesehen, dass der erste und der zweite Zeiger 1, 9 einen gemeinsamen Drehpunkt bzw. im wesentlichen zusammenfallende Drehpunkte bzw. Drehachsen aufweisen. Es kann jedoch erfindungsgemäß durchaus auch vorgesehen sein, dass sich die Drehpunkte des ersten Zeigers 1 bzw. des zweiten Zeigers 9 voneinander unterscheiden. Der zweite Zeiger 9 ist insbesondere um eine im wesentlichen senkrecht zur Anzeigefläche 3 verlaufende Drehachse drehbar ausgebildet. Der sich auf der Rückseite der Anzeigefläche 3 (bzw. unterhalb der Anzeigefläche 3) befindende erste Zeiger 1, der im folgenden auch als Unterflurzeiger 1 bezeichnet wird, weist eine Lichtquelle 2 auf, die zur optischen Darstellung einer Information auf der Vorderseite der Anzeigefläche 3 angeordnet ist, insbesondere zusammen mit dem ersten Zeiger 1 drehbeweglich angeordnet ist. Dieses ist jedoch gemäß der vorliegenden Erfindung nicht zwingend notwendig, denn es könnte die Lichtquelle 2 auch feststehend sein und unterhalb der Anzeigefläche 3 angeordnet sein. Der Unterflurzeiger 1 ist bevorzugt ebenfalls um entweder die Drehachse des zweiten Zeigers 9 drehbar oder aber um eine zu dieser Drehachse parallele Achse drehbar. Als Anzeigewerte der Zeiger 1, 9 kann beispielsweise eine geschwindigkeitsbezogene und/oder eine drehzahlbezogene Größe oder auch jede andere fahrzeugtechnisch oder komfortmäßig relevante Größe vorgesehen sein, beispielsweise die Momentangeschwindigkeit und eine Richtgeschwindigkeit oder eine angestrebte Geschwindigkeit (etwa eines Tempomaten).

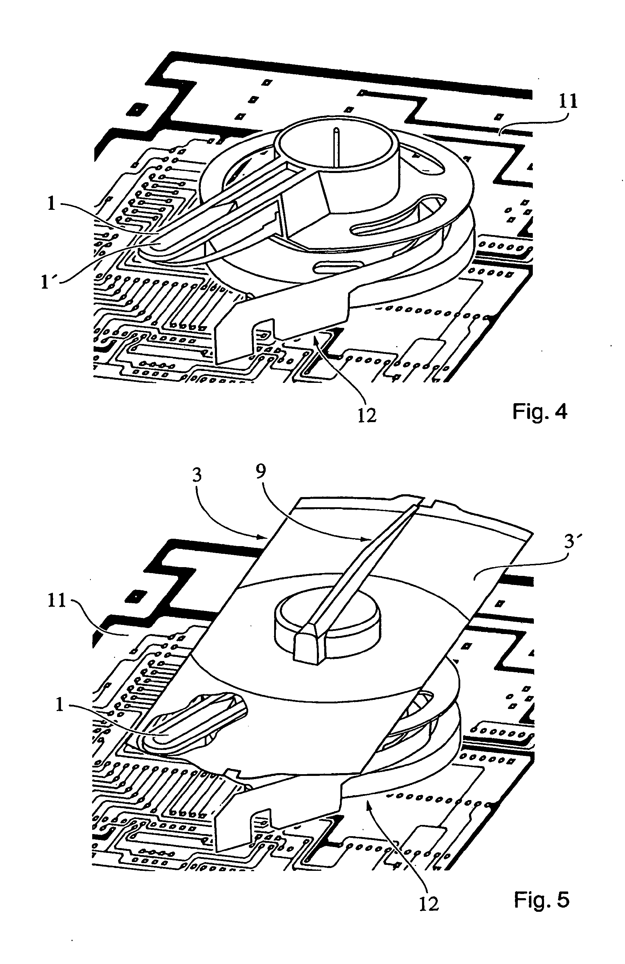

In den **Figuren 2** **und** **4** sind schematisch verschiedene Detaildarstellungen des ersten Zeigers 1 gemäß perspektivischer Darstellungen bzw. in der **Figur 3** gemäß einer Seitenansicht dargestellt. Hierbei ist der erste Zeiger 1 erfindungsgemäß insbesondere oberhalb einer Leiterplatte 11 der erfindungsgemäßen Anzeigvorrichtung 10 angeordnet. Die Anzeigefläche 3 ist in den Figuren 2 bis 4 nicht dargestellt. Der erste Zeiger 1 weist die Lichtquelle 2 auf, mittels der Licht 4 abgestrahlt wird. Hierbei kann die Lichtquelle 2 insbesondere als eine Leuchtdiode ausgeführt sein oder auch als eine Mehrzahl von Leuchtdioden. Über insbesondere einen im ersten Zeiger 1 integrierten Lichtleitkörper wird das Licht 4 bzw. ein Lichtbündel 4 zur Anzeige auf der Anzeigefläche 3 bzw. auf der Vorderseite der Anzeigefläche 3 gebracht, indem das Lichtbündel 4 auf die Anzeigefläche 3 von ihrer Rückseite her fällt. Bei dem auf der Anzeigefläche 3 sichtbaren Licht 4 handelt es sich insbesondere um im wesentlichen paralleles Licht 4, es kann sich jedoch auch um divergierendes Licht 4 handeln. Hierbei weist der ersten Zeiger 1 insbesondere eine Lichtaustrittsfläche 1' zur Abstrahlung des Licht 4 bzw. des Lichtbündels 4 in Richtung zur Anzeigefläche 3 hin auf, die in weiten Bereich optisch an die Darstellungsanforderungen angepasst werden kann, beispielsweise derart, dass die Darstellung des ersten Zeigers 1 im wesentlichen der Darstellung des zweiten Zeigers 2 entspricht. Die Anzeigefläche 3 ist zumindest in demjenigen Teilbereich, über den das Licht 4 des ersten Zeigers 1 von der Rückseite der Anzeigefläche 3 auf der Vorderseite der Anzeigefläche 3 zur Anzeige gebracht werden soll, zumindest teiltransparent bzw. teilweise lichtdurchlässig ausgebildet. Daher ist für einen Benutzer der Anzeigefläche 3 auf ihrer Vorderseite das Lichtbündel 4 als optische Information sichtbar. Die Lichtquelle 2 ist mittels insbesondere einer flexiblen Leiterbahn 12 bzw. eines flexiblen, beispielsweise in der Art einer flexiblen Leiterplatte hergestellten Kabels 12 bzw. einer elektrischen Verbindung 12 elektrisch angeschlossen, wobei die flexible Leiterbahn 12 insbesonder zumindest ansatzweise spiralförmig erstreckt und daher der Drehbewegung des ersten Zeigers 1 zumindest teilweise folgt. Ein Motor 13 zum Antrieb des ersten Zeigers 1 und/oder des zweiten Zeigers 9 ist insbesondere in der Figur 3 ebenfalls dargestellt.

In **Figur 5** ist schematisch der erste Zeiger 1 und der zweite Zeiger 9 in einer Detailansicht der teilweise aufgeschnitten dargestellten Anzeigevorrichtung 10 abgebildet. In Figur 5 ist ausschnittsweise auch die Anzeigefläche 3 dargestellt. Sichtbar ist ein Bereich der Anzeigefläche 3, der radial im Bereich 3' des ersten Zeigers 1 verläuft und der teiltransparent ausgelegt ist, damit das von der Lichtquelle 2 generierte Licht 4 über den ersten Zeiger 1 zur Darstellung auf der Anzeigefläche 3 gebracht werden kann.

### Bezugszeichenliste

- 1: erster Zeiger
- 1': Lichtaustrittsfläche
- 2: Lichtquelle
- 3: Anzeigefläche
- 3': Bereich des ersten Zeigers
- 4: Licht / Lichtbündel
- 9: zweiter Zeiger
- 10: Anzeigevorrichtung
- 11: Leiterplatte
- 12: Leiterbahn
- 13: Motor

## Patentansprüche

1. Anzeigevorrichtung (10) mit einem ersten beweglichen Zeiger (1), einem zweiten beweglichen Zeiger (9), einer Lichtquelle (2) und einer Anzeigefläche (3), wobei der erste Zeiger (1) und die Lichtquelle (2) auf einer einer Sichtseite der Anzeigefläche (3) abgewandten Seite angeordnet sind, wobei der erste Zeiger (1) und die Lichtquelle (2) derart angeordnet sind, dass von dem ersten Zeiger (1) Licht (4) in Richtung zur Anzeigefläche (3) hin abstrahlbar ist und wobei der zweite Zeiger (9) auf der Sichtseite der Anzeigefläche (3) angeordnet ist, wobei die Anzeigefläche (3) zumindest im Bereich des vom ersten Zeiger (1) abgestrahlten Lichts (4) zumindest teilweise derart transparent ausgebildet ist, dass die Darstellung des ersten Zeigers (1) im wesentlichen der Darstellung des zweiten Zeigers (9) entspricht, **dadurch gekennzeichnet, dass** die Lichtquelle (2) divergentes und/oder konvergentes Licht erzeugt und im wesentlichen paralleles Licht (4) die Darstellung des ersten Zeigers (1) auf der Anzeigefläche (3) bewirkt, wobei der erste Zeiger (1) mindestens ein optisches Bauteil aufweist, mittels dem eine Umwandlung des Lichts der Lichtquelle (2) in paralleles Licht (4) vorgesehen ist, wobei als Lichtquelle eine Mehrzahl von in verschiedenen Farben leuchtbaren Leuchtdioden vorhanden ist, wobei die Lichtquelle mittels einer flexiblen Leiterbahn elektrisch angeschlossen ist, wobei sich die flexible Leiterbahn zumindest ansatzweise spiralförmig erstreckt.

2. Anzeigevorrichtung (10) nach Anspruch 1, wobei die Darstellung des ersten Zeigers (1) eine Spitze aufweist.

3. Anzeigevorrichtung (10) nach einem der vorhergehenden Ansprüche, wobei der erste Zeiger (1) und/oder der zweite Zeiger (9) drehbeweglich ausgebildet ist.

4. Anzeigevorrichtung (10) nach einem der vorhergehenden Ansprüche, wobei die Lichtquelle (2) relativ zu dem ersten Zeiger (1) ortsfest angeordnet ist.

## Claims

1. A display device (10) with a first movable pointer (1), a second movable pointer (9), a light source (2) and a display surface (3), wherein the first pointer (1) and the light source (2) on the one side of the display surface (3) are arranged so that the first pointer (1) and the light source (2) are positioned on the underside of the display surface (3) and wherein the second pointer (9) is positioned on the visible side of the display surface (3), wherein the display surface (3) is at least in the area of the first pointer (1) with the emitted light (4) at least partially displayed so that the appearance of the first pointer (1) corresponds substantially to the representation of the second pointer (9), **characterised by** the light source (2) generating a divergent and/or convergent light and in the principle a parallel light (4), which effects the display of the first pointer (1) to the display surface (3), wherein the first pointer (1) has at least one optical element by means of which a conversion of the light from the light source (2) into emitted light (4) is provided, whereby in the light source a plurality of different coloured LEDs are present, wherein the light source is electrically connected by a flexible lead, which extends to the flexible circuit at least initially in a spiral manner.

2. A display device (10) according to Claim 1, wherein the representation of the first pointer (1) has a point.

3. A display device (10) according to any one of the preceding claims, wherein the said first pointer (1) and/or the second pointer (9) may be rotated.

4. A display device (10) according to any one of the preceding claims, wherein the light source (2) relative to the first pointer (1) is arranged in a fixed manner.

## Revendications

1. Dispositif d'affichage (10) comportant un premier afficheur mobile (1), un second afficheur mobile (9), une source lumineuse (2) et une surface d'affichage (3), le premier afficheur (1) et la source lumineuse (2) étant disposés sur une face détournée d'une surface visible de la surface d'affichage (3), le premier afficheur (1) et la source lumineuse (2) étant disposés de manière à ce que de la lumière (4) puisse être diffusée par le premier afficheur (1) en direction de la surface d'affichage (3), le second afficheur (9) étant disposé sur la surface visible de la surface d'affichage (3), la surface d'affichage (3) étant transparente au moins au niveau de la lumière (4) diffusée par le premier afficheur (1) de telle sorte que la restitution du premier afficheur (1) coïncide sensiblement avec la restitution du second afficheur (9), **caractérisé en ce que** la source lumineuse (2) génère de la lumière divergente et/ou convergente et sensiblement parallèle (4) qui provoque la restitution par le premier afficheur (1) sur la surface d'affichage (3), le premier afficheur (1) présentant au moins une pièce optique qui permet une transformation de la lumière de la source lumineuse (2) en lumière parallèle (4), étant prévus comme source lumineuse une pluralité de diodes électroluminescentes pouvant s'allumer en différentes couleurs, la source lumineuse étant raccordée électriquement au moyen d'une piste conductrice, la piste conductrice souple s'étendant en spirale au moins à certains points de repère.

2. Dispositif d'affichage (10) selon la revendication 1, la restitution par le premier afficheur (1) présentant une pointe.

3. Dispositif d'affichage (10) selon une des revendications précédentes, le premier afficheur (1) et/ou le second afficheur (9) étant mobiles en rotation.

4. Dispositif d'affichage (10) selon une des revendications précédentes, la source lumineuse (2) étant fixe par rapport au premier afficheur (1).
